# EUROPEAN PATENT SPECIFICATION

(11) **EP 3 752 701 B1**
(45) Date of publication and mention of the grant of the patent: **23.07.2025**
(21) Application number: 19716481.7
(22) Date of filing: 21.03.2019
(51) Int. Cl.: E06B 11/02, F16B 7/14, E06B 9/06

(54) **ADJUSTABLE LENGTH BARRIER**
LÄNGENVERSTELLBARE BARRIERE
BARRIÈRE DE LONGUEUR AJUSTABLE

(30) Priority: 21.03.2018 GB 201804536
(43) Date of publication of application: 23.12.2020
(73) Proprietor: F. Klucznik & Son Limited, Adderley Green Stoke-on-Trent, Staffordshire ST3 5BW (GB)
(72) Inventor: ALLEN, Robert Edward, Stoke on Trent, Staffordshire ST3 5BW (GB)
(74) Representative: Swindell & Pearson Limited
(86) International application number: PCT/GB2019/050811
(87) International publication number: WO 2019/180447

(56) References cited:
- CN-A- 107 178 546
- FR-A1- 2 751 025
- US-A1- 2015 101 250

## Description

This invention concerns adjustable length barriers, and also locking arrangements, particularly for telescopic arrangements.

In farms and other agricultural locations and elsewhere, it is often required to provide a barrier which may be in the form of an openable gate. Such a barrier may be provided for a particular size opening or space, which may not be a standard length. Accordingly, it may be necessary to produce a bespoke length barrier. Alternatively, a barrier whose length can be selectively adjusted may be used.

Prior adjustable length barriers such as farm gates have not always been satisfactory for a number of reasons. Some prior arrangements have used a trapped nut to permit locking at a required length adjustment. Such an arrangement can though be relatively difficult to manufacture. For instance, it is generally not desirable to thread a galvanised product. Difficulties or inefficiencies can be encountered in correctly locating the trapped nut and/or a locator for the trapped nut, and/or in drilling into tubes or other members used in the barrier.

FR 2 751 025 A1 discloses (abstract) a barrier having two uprights and two main girders and at least one additional girder. The main girders are fixed to the uprights, one end of the additional girder is free and positioned opposite the upright. A rod slides lengthwise in relation to the additional girder from its free end. A closing section is fixed to the free end of the rod and is parallel to the upright. A passage is formed between the closing section and the upright which is opened when the closing section is moved away from the upright and closed when this section is moved towards the upright. There is locking mechanism, which has a roller which rotates around an axis when an animal comes into contact with the roller. The locking mechanism holds the closing section in an open, closed or intermediate position.

According to the invention there is provided an adjustable length barrier, with the features of claim 1.

A one of the connecting members interconnects the telescopic part cross members.

The open ended channels extend substantially parallel to the cross members. Some of the open ended channels may extend immediately below the cross members in use, and some of the open ended channels may extend immediately above the cross members in use.

The locking member may be configured so as to be slidable into the open ended channel from one end only thereof.

The locking member may have an enlarged head at an opposite end to the locking formation, which enlarged head is too large to pass through the open ended channel.

The locking formation on the locking members may comprise a threaded hole. A threaded fastening means may be provided, which may be in the form of a bolt or screw. The locking member may be configured such that once a threaded fastening means is engaged therein, the locking member cannot be withdrawn from the channel.

Sleeve members may be provided which include a sleeve part locatable within ends of the respective cross member home parts with a telescopic part of the cross member slidably extendible through the sleeve parts.

The sleeve members may also include a flange engageable against the outside end of the cross member home parts.

The sleeve members may also comprise a collar part which extends from the flange away from the sleeve part. An opening may be provided through the collar part alignable with the locking formation, through which collar part opening a threaded fastening means is extendible to engage with the telescopic part, and the collar part opening may be of smaller diameter than the threaded fastener means such that a sleeve member positively engages therewith. The opening may include a ring of material engageable with the threaded fastening means.

The sleeve member may be configured such that the ring of material locates immediately adjacent a locking member located in a respective open ended channel.

The sleeve material may be made of a resilient material, and may be made of a plastics material and may be made of HDPE or nylon.

Embodiments of the present invention will now be described by way of example only and with reference to the accompanying drawings, in which:-
Fig. 1 is a diagrammatic side view of a first barrier arrangement according to the invention;
Fig. 2 is a similar view to Fig. 1 of a second barrier arrangement;

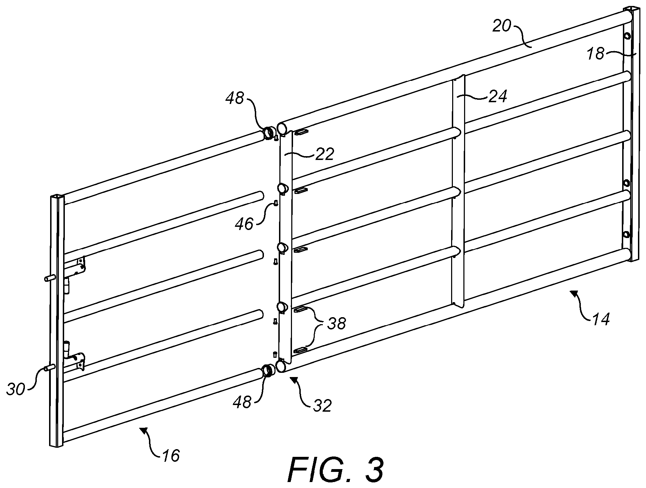

Fig. 3 is a diagrammatic exploded perspective view of the barrier arrangement of Fig. 1;
Fig. 4 is a diagrammatic cross sectional side view of part of the barrier arrangement of Fig. 1;
Fig. 5 is a similar view to Fig. 4 but not in section;
Fig. 6 is a diagrammatic exploded perspective view of part of the barrier arrangement of Fig. 1;

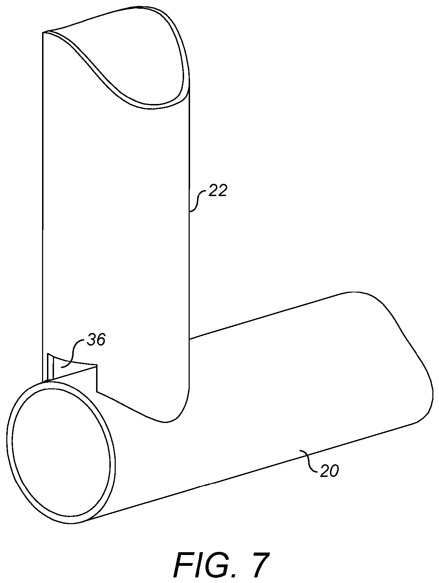

Fig. 7 is a diagrammatic perspective view of a lower part of the barrier arrangement of Fig. 1;

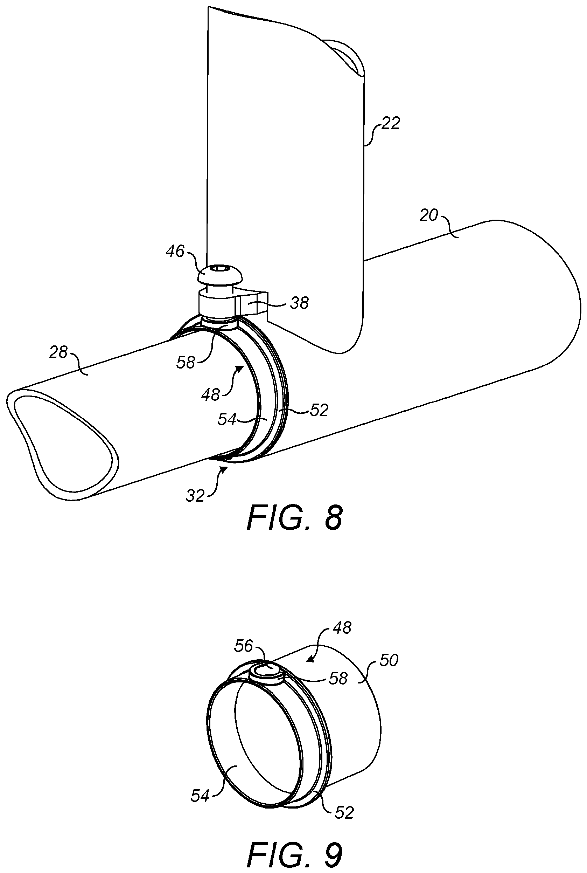

Fig. 8 is a diagrammatic perspective view of a lower part of the barrier arrangement of Fig. 1;
Fig. 9 is a diagrammatic perspective view of a component of the barrier arrangement of Fig. 1; and

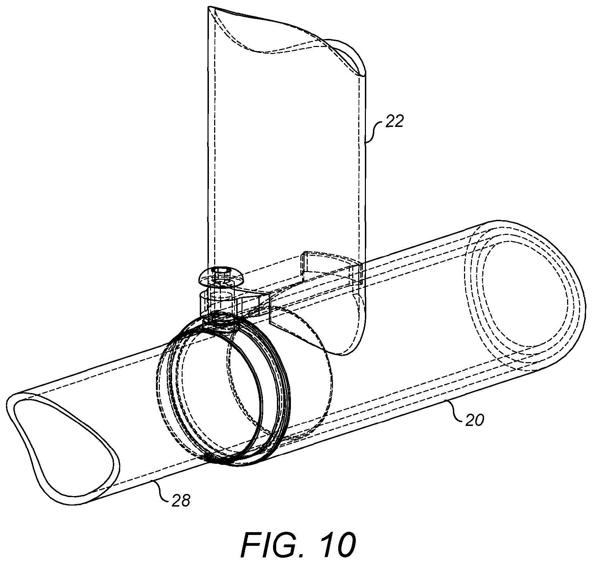

Fig. 10 is a similar view to Fig. 8 illustrating hidden detail.

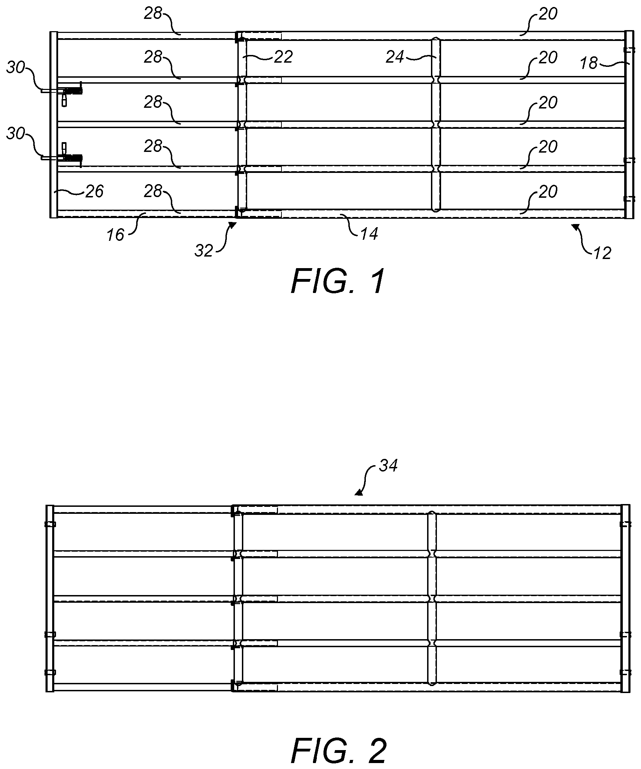

Fig. 1 and other drawings show a first barrier arrangement in the form of an adjustable length gate 12 suitable for use in a farm or many other applications. The gate 12 includes a main home part 14 with a telescopic part 16 extending from the home part 14 at a required relative position to provide a required total length for the gate 12.

The home part 14 includes a square section tubular steel hanging stile 18 mountable for instance to two or more hinges (not shown) in a conventional manner. Five spaced circular section tubular steel horizontal rails 20 are provided extending perpendicularly from the hanging stile 18. Two circular section steel tubular braces 22, 24 extend between the horizontal rails 20. A first end brace 22 is provided adjacent the ends of the horizontal rails 20 away from the hanging stile 18. An intermediate brace 24 is provided between the end brace 22 and the hanging stile 18.

The telescopic part 16 includes a square section steel tubular closing stile 26 from which extend five equispaced circular section steel horizontal rails 28, with the telescopic part horizontal rails 28 being of smaller diameter than the home part horizontal rails 20 so as to be telescopically movable therein. Conventional latches 30 are provided on the closing stile 26. A locking arrangement 32 is provided between the home part 14 and each telescopic part horizontal rail 28, as will be hereinafter described.

Fig. 2 shows a similar second barrier arrangement 34 to the first barrier arrangement, except this is in the form of a fixed barrier arrangement rather than a gate 12, and can be used as a yard panel or similar.

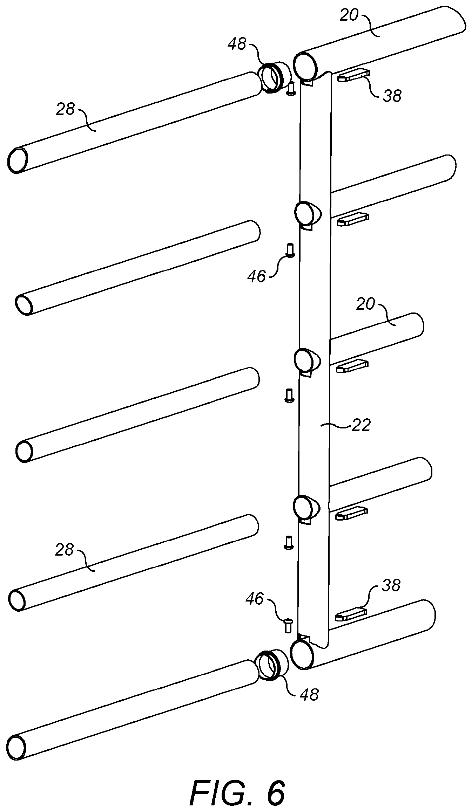

Each locking arrangement 32 includes a passage 36 between the respective home part horizontal rail 20 and the end brace 22. The passage 36 is as provided by a cut out in the end brace 22 as the passage 36 is located immediately beneath the respective home part horizontal rail 20 for the top four rails 20, and immediately above the lowermost horizontal rail 20, illustrated in Fig. 6.

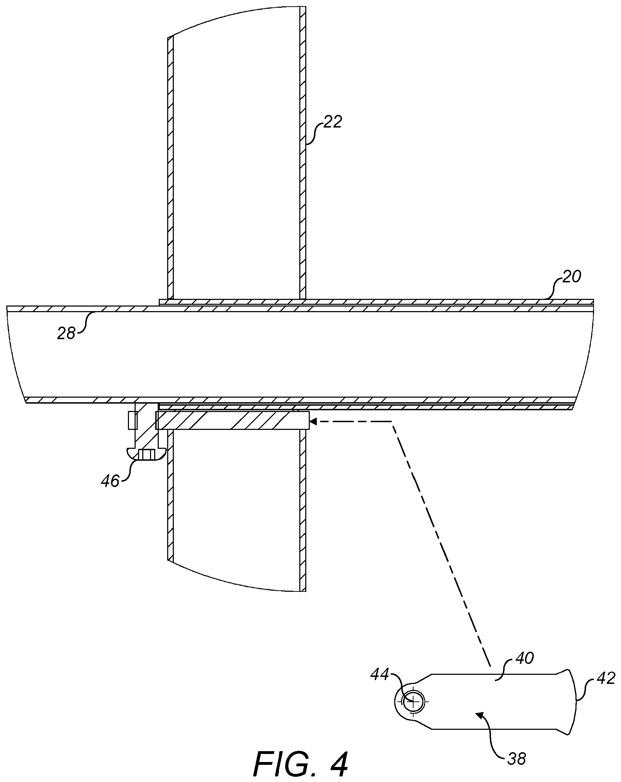

A respective locking member 38 as shown for example in Fig. 4, is slidably located in each passage 36, and can be slid therein in a direction away from the hanging stile 18. The locking member 38 is in the form of a profiled strip 40 with an enlarged head 42 which is too large to pass through the passage 36, such that the locking member 38 can locate in the passage 36 with the enlarged head 42 just extending thereoutof towards the hanging stile 18, as illustrated in Fig. 4.

At the opposite end of the locking member 38 to the enlarged head 42, a threaded hole 44 is provided. The locking member 38 may be in the form of a steel insert which may be plated. A grub screw 46 is threadingly extendible through the threaded hole 44 as shown in Fig. 4, and can engage with a respective telescopic part horizontal rail 28, to lock same in position relative to the respective home part horizontal rail 20.

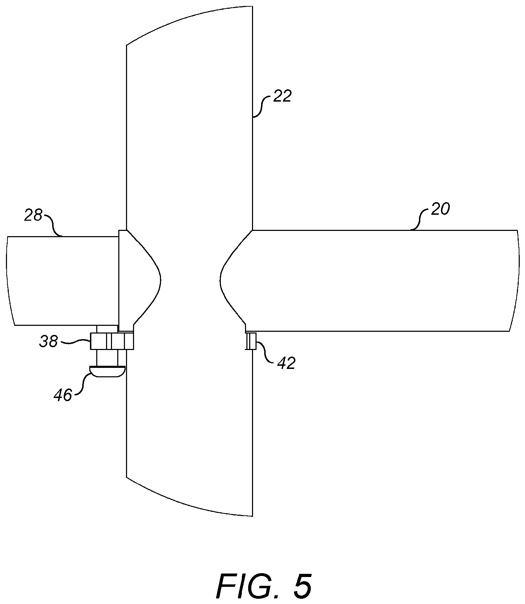

A sleeve member 48 may be provided but which has been omitted from Figs. 4 and 5. A sleeve member may be provided on just the top and lowermost home part horizontal rails 20. The sleeve member 48 is made of a resilient material and may be made of plastics material such as HDPE, nylon or another polymer. The sleeve member 48 has a sleeve part 50 which locates within an end of the respective home part horizontal rail 20, and the respective telescopic part horizontal rail 28 can slidingly extend therethrough. The sleeve part 50 provides for secure location of the telescopic part horizontal rail 28 within the home part horizontal rail 20, aids sliding therebetween, accommodates manufacturing tolerances of the components, and also substantially prevents any rattling therebetween.

The sleeve member 48 also includes a flange 52 which is of a size to engage against the end of the home part horizontal rail 20. A collar part 54 extends from the flange and again can slidingly accept the telescopic part horizontal rail 28 extending therethrough.

A hole 56 is provided through the collar part 54 with a surrounding ring 58 of material. The hole 56 is alignable with the threaded hole 44 in the locking member 38. The hole 56 in the collar part 54 is a little smaller such that the grub screw 46 will positively engage therewith. The hole 56 in the collar part 54 being of a resilient material will positively engage with the grub screw 46 and prevent any inadvertent loosening due to vibration etc. which otherwise could take place.

In use, the sleeve members 48 will be located in the home part horizontal rails 20 as required. The locking members 38 are then located in the respective passages 36. The grub screws 46 will be inserted a short way into the locking members 38, thereby retaining the locking members 38 in the respective passages 36.

The telescopic part 16 is then inserted into the home part 14 with the respective telescopic horizontal rails 28 entering the home part horizontal rails 20 to a required distance to provide a gate 12 of a required length. Once the telescopic part 16 is in a required position, the grub screws 46 can be tightened onto the telescopic horizontal rails 28 to lock same into position.

There is thus described an adjustable length barrier arrangement, in this instance in the form of a gate, and a locking arrangement usable in such a barrier arrangement. This arrangement provides for a number of advantageous features relative to prior arrangements. Providing the cut outs in the braces is a straightforward manufacturing operation thereby not providing any significant complexity or additional cost or time. It is not necessary for any additional parts to be welded onto the frame for instance to hold a trapped nut. No additional drilling for the gate is required. The plastics material sleeve members centres and limits free play in the bottom and top rails, and also provides an antivibration thread lock for the grub screws of these rails.

Whilst described above in relation to barrier arrangements in the form of a gate or yard panel, it is to be realised that arrangements according to the invention could be used in a wide range of telescopic or other configurations, and different shapes or types of barriers and the like.

With this arrangement the gate or other barrier can readily be configured to a required length with low cost components, and can also be readily adjusted if ever required.

Various other modifications may be made without departing from the scope of the invention, which is limited solely by the wording of the appended claims. For instance, different materials may be used. The locking member may take a different form, and may have a different formation to prevent fully extending through the passages. A fastening means other than the grub screw could be used, and this could be a bolt or otherwise. The sleeve members may take a different form and may not always be required, or could be provided more than just on the top and bottom rails.

## Claims

1. An adjustable length barrier, the barrier comprising:
a plurality of spaced substantially parallel cross members (20, 28), with each cross member (20, 28) having a telescopic part (16) selectively movable into or out of a home part (14) to adjust the barrier length;
a plurality of spaced connecting members (22, 24) which extend substantially perpendicular to the cross members (20, 28) and interconnect the cross members (20, 28), a one of the connecting members (22) interconnecting the home part cross members (20) adjacent an end of the home part cross members (20), thereof through which the respective telescopic parts (28) are selectively movable, the one spaced connecting member (22) and/or the home part cross members (20) being profiled so as to define a plurality of open ended channels therebetween;
a locking member (38) being slidably locatable in each open ended channel, the locking member (38) having a locking formation adjacent an end thereof which is accessible when the locking member is located in the open ended channel, which locking formation permits engagement with the telescopic part (16) to lock the telescopic part (16) in a required position relative to the home part (14);
wherein the open ended channels extend substantially parallel to the cross members (20, 28).

2. An adjustable length barrier as claimed in any preceding claim, wherein a one of the connecting members (22, 24) interconnects the telescopic part cross members.

3. An adjustable length barrier as claimed in any preceding claim, wherein each open ended channel is provided by a cut out (36) in the one spaced connecting member (22)

4. An adjustable length barrier as claimed in any preceding claim, wherein some of the open ended channels extend immediately below the cross members (20,28) in use; and/or
wherein some of the open ended channels extend immediately above the cross members (20, 28) in use.

5. An adjustable length barrier as claimed in any preceding claim, wherein the locking member (38) is configured so as to be slidable into the open ended channel from one end only thereof; and/or
wherein the locking member (38) has an enlarged head (42) at an opposite end to the locking formation, which enlarged head (42) is too large to pass through the open ended channel.

6. An adjustable length barrier as claimed in any preceding claim, wherein the locking formation on the locking members (38) comprises a threaded hole (44).

7. An adjustable length barrier as claimed in any preceding claim wherein a threaded fastening means (46) is provided, which is in the form of a bolt or screw, wherein the locking member (38) is configured such that once the threaded fastening means (46) is engaged therein, the locking member cannot be withdrawn from the channel.

8. An adjustable length barrier as claimed in any preceding claim, wherein sleeve members (48) are provided which include a sleeve part (50) locatable within ends of the respective cross member home parts (20) with a telescopic part of the cross member (28) slidably extendible through the sleeve parts (50).

9. An adjustable length barrier as claimed in claim 8, wherein the sleeve members (48) also include a flange (52) engageable against the outside end of the cross member home parts (20).

10. An adjustable length barrier as claimed in claim 9, wherein the sleeve members (48) also comprise a collar part (54) which extends from the flange (52) away from the sleeve part (50).

11. An adjustable length barrier as claimed in claim 10, wherein an opening is provided through the collar part (54) alignable with the locking formation, through which collar part opening a threaded fastening means (46) is extendible to engage with the telescopic part (16).

12. An adjustable length barrier as claimed in claim 11, wherein the collar part opening is of smaller diameter than the threaded fastener means (46) such that a sleeve member (48) positively engages therewith.

13. An adjustable length barrier as claimed in claim 11 or 12, wherein the opening includes a ring (58) of material engageable with the threaded fastening means (46), wherein the sleeve member (48) is configured such that the ring of material locates immediately adjacent a locking member (38) located in a respective open ended channel.

14. An adjustable length barrier as claimed in any of claims 8 to 13, wherein the sleeve material is made of a resilient material; and/or
wherein the sleeve material is made of a plastics material.

15. An adjustable length barrier as claimed in any of claims 8 to 14, wherein the sleeve material is made of HDPE or nylon.

## Patentansprüche

1. Längenverstellbare Barriere, wobei die Barriere Folgendes umfasst:
eine Vielzahl von beabstandeten, im Wesentlichen parallelen Querelementen (20, 28), wobei jedes Querelement (20, 28) ein Teleskopteil (16) aufweist, das selektiv in ein oder aus einem Heimteil (14) bewegbar ist, um die Barrierenlänge zu verstellen;
eine Vielzahl von beabstandeten Verbindungselementen (22, 24), die sich im Wesentlichen senkrecht zu den Querelementen (20, 28) erstreckt und die Querelemente (20, 28) miteinander verbindet, wobei eines der Verbindungselemente (22) die Heimteilquerelemente (20) benachbart zu einem Ende der Heimteilquerelemente (20) miteinander verbindet, durch welche die jeweiligen Teleskopteile (28) selektiv bewegbar sind, wobei das eine beabstandete Verbindungselement (22) und/oder die Heimteilquerelemente (20) profiliert sind, um eine Vielzahl von offen endenden Kanälen dazwischen zu definieren;
ein Verriegelungselement (38), das verschiebbar in jedem offen endenden Kanal platzierbar ist, wobei das Verriegelungselement (38) eine Verriegelungsformation benachbart zu einem Ende davon aufweist, die zugänglich ist, wenn das Verriegelungselement in dem offen endenden Kanal platziert ist, wobei die Verriegelungsformation Eingriff mit dem Teleskopteil (16) ermöglicht, um das Teleskopteil (16) in einer erforderlichen Position relativ zu dem Heimteil (14) zu verriegeln;
wobei sich die offen endenden Kanäle im Wesentlichen parallel zu den Querelementen (20, 28) erstrecken.

2. Längenverstellbare Barriere nach einem vorhergehenden Anspruch, wobei eines der Verbindungselemente (22, 24) die Teleskopteilquerelemente miteinander verbindet.

3. Längenverstellbare Barriere nach einem vorhergehenden Anspruch, wobei jeder offen endende Kanal durch einen Ausschnitt (36) in dem einen beabstandeten Verbindungselement (22) bereitgestellt ist.

4. Längenverstellbare Barriere nach einem vorhergehenden Anspruch, wobei sich einige der offen endenden Kanäle in Verwendung unmittelbar unter den Querelementen (20, 28) erstrecken; und/oder
wobei sich einige der offen endenden Kanäle in Verwendung unmittelbar über den Querelementen (20, 28) erstrecken.

5. Längenverstellbare Barriere nach einem vorhergehenden Anspruch, wobei das Verriegelungselement (38) konfiguriert ist, um in den offen endenden Kanal von nur einem Ende davon verschiebbar zu sein; und/oder
wobei das Verriegelungselement (38) einen vergrößerten Kopf (42) an einem entgegengesetzten Ende zu der Verriegelungsformation aufweist, wobei der vergrößerte Kopf (42) zu groß ist, um durch den offen endenden Kanal durchzutreten.

6. Längenverstellbare Barriere nach einem vorhergehenden Anspruch, wobei die Verriegelungsformation an den Verriegelungselementen (38) ein Gewindeloch (44) umfasst.

7. Längenverstellbare Barriere nach einem vorhergehenden Anspruch, wobei ein Gewindebefestigungsmittel (46) bereitgestellt ist, das in der Form eines Bolzens oder einer Schraube ist, wobei das Verriegelungselement (38) konfiguriert ist, sodass, sobald das Gewindebefestigungsmittel (46) darin eingegriffen ist, das Verriegelungselement nicht aus dem Kanal zurückgezogen werden kann.

8. Längenverstellbare Barriere nach einem vorhergehenden Anspruch, wobei Hülsenelemente (48) bereitgestellt sind, die ein Hülsenteil (50) beinhalten, das innerhalb von Enden der jeweiligen Querelementheimteile (20) platzierbar ist, wobei ein Teleskopteil des Querelements (28) verschiebbar durch die Hülsenteile (50) erweiterbar ist.

9. Längenverstellbare Barriere nach Anspruch 8, wobei die Hülsenelemente (48) auch einen Flansch (52) beinhalten, der gegen das äußere Ende der Querelementheimteile (20) eingreifbar ist.

10. Längenverstellbare Barriere nach Anspruch 9, wobei die Hülsenelemente (48) auch ein Kragenteil (54) umfassen, das sich von dem Flansch (52) weg von dem Hülsenteil (50) erstreckt.

11. Längenverstellbare Barriere nach Anspruch 10, wobei eine Öffnung durch das Kragenteil (54) bereitgestellt ist, das mit der Verriegelungsformation ausrichtbar ist, wobei durch die Kragenteilöffnung ein Gewindebefestigungsmittel (46) erweiterbar ist, um mit dem Teleskopteil (16) einzugreifen.

12. Längenverstellbare Barriere nach Anspruch 11, wobei die Kragenteilöffnung einen kleineren Durchmesser als das Gewindebefestigungsmittel (46) aufweist, sodass ein Hülsenelement (48) formschlüssig damit eingreift.

13. Längenverstellbare Barriere nach Anspruch 11 oder 12, wobei die Öffnung einen Ring (58) aus Material beinhaltet, der mit dem Gewindebefestigungsmittel (46) eingreifbar ist, wobei das Hülsenelement (48) konfiguriert ist, sodass sich der Ring aus Material unmittelbar benachbart zu einem Verriegelungselement (38) platziert, das in einem jeweiligen offen endenden Kanal platziert ist.

14. Längenverstellbare Barriere nach einem der Ansprüche 8 bis 13, wobei das Hülsenmaterial aus einem elastischen Material hergestellt ist; und/oder
wobei das Hülsenmaterial aus einem Kunststoffmaterial hergestellt ist.

15. Längenverstellbare Barriere nach einem der Ansprüche 8 bis 14, wobei das Hülsenmaterial aus HDPE oder Nylon hergestellt ist.

## Revendications

1. Barrière de longueur réglable, la barrière comprenant :
une pluralité d'éléments transversaux espacés sensiblement parallèles (20, 28), chaque élément transversal (20, 28) comportant une partie télescopique (16) pouvant être sélectivement déplacée dans ou hors d'une partie de base (14) pour régler la longueur de la barrière ;
une pluralité d'éléments de connexion espacés (22, 24) qui s'étendent sensiblement perpendiculairement aux éléments transversaux (20, 28) et interconnectent les éléments transversaux (20, 28), l'un des éléments de connexion (22) interconnectant les éléments transversaux de partie de base (20) adjacents à une extrémité des éléments transversaux de partie de base (20), à travers laquelle les parties télescopiques respectives (28) peuvent sélectivement se déplacer, l'un des éléments de connexion espacés (22) et/ou les éléments transversaux de partie de base (20) étant profilés de manière à définir une pluralité de canaux à extrémités ouvertes entre eux ;
un élément de verrouillage (38) pouvant être positionné de manière coulissante dans chaque canal à extrémité ouverte, l'élément de verrouillage (38) comportant une formation de verrouillage adjacente à une extrémité de celui-ci qui est accessible lorsque l'élément de verrouillage est situé dans le canal à extrémité ouverte, laquelle formation de verrouillage permet un engagement avec la partie télescopique (16) pour verrouiller la partie télescopique (16) dans une position requise par rapport à la partie de base (14) ;
dans laquelle les canaux à extrémités ouvertes s'étendent sensiblement parallèlement aux éléments transversaux (20, 28).

2. Barrière de longueur réglable selon l'une quelconque des revendications précédentes, dans laquelle l'un des éléments de connexion (22, 24) interconnecte les éléments transversaux de partie télescopique.

3. Barrière de longueur réglable selon l'une quelconque des revendications précédentes, dans laquelle chaque canal à extrémité ouverte est fourni par une découpe (36) dans l'un élément de connexion espacé (22).

4. Barrière de longueur réglable selon l'une quelconque des revendications précédentes, dans laquelle certains des canaux à extrémités ouvertes s'étendent immédiatement au-dessous des éléments transversaux (20, 28) lors de l'utilisation ; et/ou
dans laquelle certains des canaux à extrémités ouvertes s'étendent immédiatement au-dessus des éléments transversaux (20, 28) lors de l'utilisation.

5. Barrière de longueur réglable selon l'une quelconque des revendications précédentes, dans laquelle l'élément de verrouillage (38) est conçu de manière à pouvoir coulisser dans le canal à extrémité ouverte à partir d'une extrémité seulement de celui-ci ; et/ou
dans lequel l'élément de verrouillage (38) comporte une tête élargie (42) à une extrémité opposée à la formation de verrouillage, laquelle tête élargie (42) est trop grande pour passer à travers le canal à extrémité ouverte.

6. Barrière de longueur réglable selon l'une quelconque des revendications précédentes, dans laquelle la formation de verrouillage sur les éléments de verrouillage (38) comprend un trou fileté (44).

7. Barrière de longueur réglable selon l'une quelconque des revendications précédentes, dans laquelle un moyen de fixation fileté (46) est fourni, lequel se présente sous la forme d'un boulon ou d'une vis, dans laquelle l'élément de verrouillage (38) est configuré de telle sorte qu'une fois que le moyen de fixation fileté (46) est engagé dans celui-ci, l'élément de verrouillage ne peut pas être retiré du canal.

8. Barrière de longueur réglable selon l'une quelconque des revendications précédentes, dans laquelle des éléments de manchon (48) sont fournis, lesquels comprennent une partie de manchon (50) pouvant être située à l'intérieur des extrémités des parties de base d'élément transversal respectives (20) avec une partie télescopique de l'élément transversal (28) pouvant se déployer de manière coulissante à travers les parties de manchon (50).

9. Barrière de longueur réglable selon la revendication 8, dans laquelle les éléments de manchon (48) comprennent également une bride (52) pouvant s'engager contre l'extrémité extérieure des parties de base d'élément transversal (20).

10. Barrière de longueur réglable selon la revendication 9, dans laquelle les éléments de manchon (48) comprennent également une partie de collier (54) qui s'étend à partir de la bride (52) à l'opposé de la partie de manchon (50).

11. Barrière de longueur réglable selon la revendication 10, dans laquelle une ouverture est prévue à travers la partie de collier (54) pouvant être alignée avec la formation de verrouillage, à travers laquelle ouverture de partie de collier un moyen de fixation fileté (46) peut se déployer pour s'engager avec la partie télescopique (16).

12. Barrière de longueur réglable selon la revendication 11, dans laquelle l'ouverture de partie de collier est d'un diamètre plus petit que le moyen de fixation fileté (46) de telle sorte qu'un élément de manchon (48) s'engage positivement avec celui-ci.

13. Barrière de longueur réglable selon la revendication 11 ou 12, dans laquelle l'ouverture comprend une bague (58) de matériau pouvant s'engager avec le moyen de fixation fileté (46), dans laquelle l'élément de manchon (48) est conçu de telle sorte que la bague de matériau se situe immédiatement à côté d'un élément de verrouillage (38) situé dans un canal à extrémité ouverte respectif.

14. Barrière de longueur réglable selon l'une quelconque des revendications 8 à 13, dans laquelle le matériau du manchon est constitué d'un matériau élastique ; et/ou
dans lequel le matériau de manchon est constitué d'un matériau plastique.

15. Barrière de longueur réglable selon l'une quelconque des revendications 8 à 14, dans laquelle le matériau de manchon est fait de HDPE ou de nylon.
